Europäisches Patentamt

European Patent Office

Office européen des brevets

(19)

(11) Veröffentlichungsnummer: **0 221 421**
**B1**

## (12) EUROPÄISCHE PATENTSCHRIFT

(45) Veröffentlichungstag der Patentschrift:
23.11.89

(51) Int. Cl.⁴: **G01N 15/06**

(21) Anmeldenummer: 86114420.2

(22) Anmeldetag: 30.11.84

(60) Veröffentlichungsnummer der früheren Anmeldung
nach Art. 76 EPÜ: 0144940

(54) Vorrichtung zur Messung des Staubungsverhaltens pulverförmiger und granulierter Stoffe.

(30) Priorität: 02.12.83 DE 3343742
02.12.83 DE 3343743
08.12.83 DE 3344463
08.12.83 DE 3344464

(43) Veröffentlichungstag der Anmeldung:
13.05.87 Patentblatt 87/20

(45) Bekanntmachung des Hinweises auf die Patenterteilung:
23.11.89 Patentblatt 89/47

(84) Benannte Vertragsstaaten:
DE IT

(56) Entgegenhaltungen:
GB-A- 1 343 963
US-A- 3 636 772

LABORATORY PRACTICE, Band 24, Nr. 4, April 1975,
Seite 247, United Trade Press Ltd; F. RHODEN:
"Apparatus to measure dust in powders"

(73) Patentinhaber: **Dr. Hans Heubach GmbH & Co. KG,
Heubachstrasse Postfach 1160,
D-3394 Langelsheim 1(DE)**

(72) Erfinder: **Gawol, Manfred, Altenauer Strasse 45,
D-3392 Clausthal-Zellerfeld(DE)**
Erfinder: **Adrian, Gerhard, Dipl.-Chem., Talstrasse 20a,
D-3380 Goslar 1(DE)**

(74) Vertreter: **Deufel, Paul, Dr., Patentanwälte Müller-Boré,
Deufel, Schön, Hertel, Lewald, Otto
Isartorplatz 6 Postfach 26 02 47, D-8000 München 26(DE)**

## Beschreibung

Die Erfindung betrifft eine Vorrichtung zur Messung des Staubungsverhaltens pulverförmiger, graunlierter und körniger Stoffe vom Typ der Pigment- und Farbstoffpräparate.

Bei Pigmenten und Farbstoffen versucht man in zunehmendem Maße staub- und staubungsfreie Zubereitungen herzustellen, die bei der Verarbeitung keine staubförmigen Emissionen verursachen. Solche staubungsfreien Zubereitungen sind zur Vermeidung von farblicher Kontaminierung bei der Handhabung von verschiedenartigen Produkten besonders erwünscht und erlauben auch ein genaues Dosieren. Staubungsverluste werden vermieden und das sauberere und sicherere Arbeiten mit solchen Zubereitungen setzt außerdem das Gesundheitsrisiko beim Arbeiten mit toxischen Pigmenten und Farbstoffen herab.

Quantitative Aussagen über das Staubungsverhalten sind daher wichtig für die verfahrenstechnische und betriebliche Sicherheit. Bisher wurde die Staubungsneigung pulverförmiger oder granulierter Stoffe in Analogie zu den vorhandenen Feinstanteilen im Prüfgut oder durch Schärzung beurteilt. Bekannt ist z.B. ein Staubungsmeßgerät, wo der Staubwert durch die Schwächung eines durch einen Auffangbehälter gehenden Lichtstrahls gemessen wird, die durch das Aufwirbeln von Parbstoffstaub beim einmaligen Herabfallen in diesem Behälter hervorgerufen wird. Derartige Methoden sind aber sehr ungenau und können zu erheblichen Fehlern führen, weil Staubpartikel häufig erst durch die Art der Bewegung beim Transport oder der Verarbeitung durch Abrieb entstehen.

Der Erfindung liegt die Aufgabe zugrunde, eine Vorrichtung zu schaffen, mit der eine einfache, schnelle und genaue Messung des Staubungsverhaltens pulverförmiger und granulierter Stoffe unter praxisnahen Bedingungen möglich ist.

Diese Aufgabe wird erfindungsgemäß durch die Vorrichtung gemäß Patentanspruch gelöst, die den Vorteil hat, daß eine tatsächliche praxisnahe Meßung des Zustandes, wie er bei Förder-, Misch- und Abfüllvorgängen auftritt, erfolgt. Dazu bleibt das Testmaterial während des gesamten Meßvorganges in rotierender Bewegung.

Dies erfolgt dadurch, daß Pulver bzw. granulatförmige Materialien in einem rotierenden Staubentwicklungsgefäß 2 von 2,5 l Inhalt 5 Minuten bei 30 U/min bewegt werden. Eingebaute Schikanen simulieren Fördervorgänge, wobei die Staubanteile von einem Luftstrom erfaßt, aus dem Staubentwicklungsgefäß herausgetragen und auf einem Filter 4 mit definierter Porosität abgeschieden werden. GrÖbere Partikel werden in einem Grobabscheider 3 zurückgehalten. Die Luft wird durch die Vakuumpumpe 5 durch das Gerät angesaugt und durch eine Schleuse mit Luftdurchsatzzähler 6 registriert und ausgebracht. Ein Motor 1 treibt das Gerät an. Das Staubentwicklungsgerät 2 ist durch die Halterung 2a fixiert oder über eine Welle direkt mit dem Motor 1 verbunden.

Die beim Betrieb der erfindungsgemäßen Vorrichtung angewandten Testdaten können wie folgt zusammengefaßt werden.

| Einwaage | 100 g |
| --- | --- |
| Meßzeit | 5 min |
| Umdrehungen | 30/min |
| Luftdurchfluß | 0,25 l/s |
| Staubungsentwicklungsgefäß | 2,50 l |

Als staubungsfreie Präparationen werden solche angesehen, die, mit dem erfindungsgemäßen Staubungsmeßgerät gemessen, Staubungswerte von 0 bis max. 5 mg/100 g ergeben, wohingegen in der Literatur oftmals Präparate als "staubungsfrei" bezeichnet werden, die bei der Bestimmung in der erfindungsgemäßen Vorrichtung zu Werten von bis zu mehreren hundert mg/100 g Probe führen.

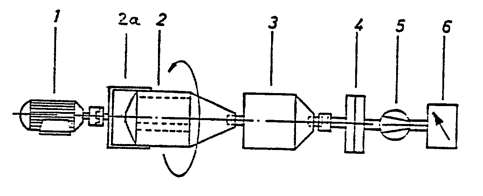

## Patentansprüche

Vorrichtung zur Messung des Staubungsverhaltens pulverförmiger und granulierter Stoffe unter praxisnahen Bedingungen, gekennzeichnet durch ein Staubentwicklungsgefäß (2), das durch einen Antriebsmotor (1) gedreht wird und eingebaute Schikanen enthält, die Fördervorgänge simulieren, eine Pumpe (5) zur Erzeugung eines Luftstroms zur Erfassung der Staubanteile, die aus dem Staubentwicklungsgefäß (2) herausgetragen und auf einen Filter (1) mit definierter Porosität abgeschieden werden, wobei zwischen dem Filter (4) und dem Staubentwicklungsgefäß (2) ein Grobabscheider (3) zur Zurückhaltung gröberer Partikel zwischengeschaltet ist, und eine Schleuse mit Luftdurchsatzzähler (6), der die Luft mißt und wo die Luft ausgebracht wird.

## Claims

A device for measuring the dust production behavior of powdery and granulated substances at conditions approximating actual practice, characterized by a dust-generating vessel (2), which is rotated by a drive motor (1) and includes built-in baffles which simulate conveyance phenomena, a pump (5) for generating an air flow for carrying the dust particles, which are discharged from the dust-generating vessel (2) and deposited onto a filter (4) having a defined porosity, wherein a coarse separator (3) for retaining coarser particles is disposed between the filter (4) and the dust-generating vessel (2), and an air lock having an air flow meter (6) which measures the air and where the air is discharged.

## Revendications

Dispositif de mesure des propriétés de pulvérisation de corps poudreux et granuleux, dans des conditions pratiques, caractérisé par un récipient de dégagement de poussières (2) qui est soumis à un mouvement de rotation au moyen d'un moteur d'entraînement (1), et qui est pourvu de chicanes incorporées qui simulent les processus de déplacement, par une pompe (5) destinée à créer un courant d'air pour capter les composants pulvérulents qui sont expulsés du récipient de dégagement de poussières (2) et déposés sur un filtre (4) à porosité définie, un sas primaire (3) étant inséré entre le filtre (4) et le récipient de dégagement de poussières (2), ledit sas primaire (4) servant à retenir les particules grossières, et par un canal de transfert muni d'un compteur de débit d'air (6) qui mesure l'air et par où l'air est expulsé.